(19) **Europäisches Patentamt**
**European Patent Office**
**Office européen des brevets**

(11) **EP 2 747 431 B1**

(12) **EUROPEAN PATENT SPECIFICATION**

(45) Date of publication and mention
of the grant of the patent:
**11.01.2017 Bulletin 2017/02**

(51) Int Cl.:
***H04N 17/00*** (2006.01)      ***G08B 29/04*** (2006.01)

(21) Application number: **13799478.6**

(22) Date of filing: **22.08.2013**

(86) International application number:
**PCT/CN2013/082038**

(87) International publication number:
**WO 2014/063524 (01.05.2014 Gazette 2014/18)**

(54) **DEVICE AND METHOD FOR DETECTING WHETHER CAMERA IS INTERFERED WITH, AND VIDEO MONITORING SYSTEM**

VORRICHTUNG UND VERFAHREN ZUR ERKENNUNG VON KAMERA-INTERFERENZEN UND VIDEOÜBERWACHUNGSSYSTEM

DISPOSITIF ET PROCÉDÉ POUR DÉTECTER SI UNE CAMÉRA SUBIT DES INTERFÉRENCES, ET SYSTÈME DE SURVEILLANCE VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2012 CN 201210413115**

(43) Date of publication of application:
**25.06.2014 Bulletin 2014/26**

(73) Proprietor: **Huawei Technologies Co., Ltd.**
**Longgang District**
**Shenzhen, Guangdong 518129 (CN)**

(72) Inventors:
• **CHEN, Xianxiao**
**Shenzhen, Guangdong 518129 (CN)**
• **BAI, Jinhua**
**Shenzhen, Guangdong 518129 (CN)**
• **WANG, Hua**
**Shenzhen, Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
EP-A1- 1 936 576      EP-A1- 2 200 001
WO-A1-03/043340      CN-A- 102 395 043
CN-A- 102 413 356      CN-A- 102 542 553
JP-A- 2006 235 959      JP-A- 2008 077 517
US-A1- 2011 064 315      US-A1- 2012 154 581

• **HARASSE, S. ET AL.: 'Automated Camera Dysfunctions Detection' IMAGE ANALYSIS AND INTERPRETATION, 2004, 6TH IEEE SOUTHWEST SYMPOSIUM ON 30 March 2004, pages 36 - 40, XP002328669**

EP 2 747 431 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to the field of camera detection technologies, and in particular, to a method and an apparatus for detecting whether a camera is interfered and a video surveillance system.

**BACKGROUND**

A video surveillance system is widely applied in fields such as a safe city, transportation, and campus surveillance. A camera is a most major front-end collection device for video surveillance, and it provides a basic image collection function for the video surveillance system. In real life, a camera may be intentionally covered, or moved, or destroyed (collectively called interference with the camera) by a criminal, or a camera is moved or covered due to some accidents, and then a video surveillance system loses its role. In a large-scale surveillance system, there are several thousand or even a ten thousand cameras, and a manual detection method causes a labor waste and is also very difficult. Therefore, it has great practical significance to automatically detect, through a surveillance system, whether a camera is interfered.

In the prior art, a histogram matching method is mainly adopted to detect whether a video camera is interfered, and is specifically as follows: First it is assumed that a color level of an image is k, where k = 1, 2, ..., N; and then the number H(k) of colors at each color level in the entire image is counted.

It is assumed that histograms of two frames of images Ii and Ij are Hi and Hj. Then a calculation formula for matching color histograms is as follows:

$$d\,(I_i, I_j) = \sum_{k=1}^{N} |\, H_i(k) - H_j(k)\,| \quad .$$

Whether the camera is covered or moved may be determined by comparing d and a set threshold.

An advantage of utilizing the foregoing method is that calculation is simple and fast. However, its disadvantage is that an image needs to be updated in real time so as to detect, by calculating a degree of a change of two frames of the image, whether a camera is interfered, and therefore only real-time detection can be performed while the method is not applicable to a polling detection case. However, the real-time detection imposes a very high requirement on broadband and a processing capability, and is not suitable for a large-scale surveillance system.

WO 03/043340 A1 provides a warning generation method and a security system using edge detection of a video image signal. The warning generation method includes the steps of : a) decoding video image signals and extracting luminance signals from the decoded video image signals; b) filtering high-frequency components of the extracted luminance signals and detecting edge components within the video image signals; c) extracting only values within a range of a predetermined first threshold value form the detected edge components; d) accumulating the detected edge components for one video image; and e) operating a warning device if an accumulation value is smaller than a predetermined second threshold value. When an intruder blinds a camera lens using a cover, the security system can generate a warning by identifying the fact that the camera is blinded by the cover.

The document "IMAGE ANALYSIS AND INTERPRETATION", 2004, 6th IEEE SOUTHWEST SYMPOSIUM ON, 30 March 2004, pages 36-40, XP002328669, provides a method for automated camera dysfunctions detection using entropy analysis.

JP 2008-077517 A provides a method to easily recognize various blocking actions to a surveillance camera. The method comprises: An image of the surveillance camera 1 is compared with a reference image to calculate a difference of luminance in each pixel. If a luminance difference value is equal to or greater than a first threshold, the pixel is defined as a changed pixel. When changed pixels are generated equally to or greater than a second threshold in a full screen, it is checked whether to be a sudden image change. In the case of being a sudden image change, it is checked whether to be such a single color blocking action to cover the camera and create only one black or such a mixed change blocking action to change the direction of the camera and change the entire image, and the type of a camera blocking action is attached to make a warning. In the case of not being the sudden image change, it is checked whether to be a foreign matter intrusion, and in the case of being a foreign matter intrusion, a warning is made. In the case of being neither the single color blocking action nor the mixed change blocking action, it is determined to be an illumination change or the like. Thus, a camera blocking action such as to cover the surveillance camera can be determined only by image processing while distinguishing it from the other causes. EP 1936576 A1 provides a method and a module for identifying possible tampering of a camera view. The method comprising receiving an image for analysis from an image sequence, converting the received image into an edge image, generating a similarity value indicating a level of similarity between said edge image and a reference edge image, indicating possible tampering of the camera view if the similarity value is within a specified tampering range, and updating the reference edge image by combining a recently analyzed edge image with the reference edge image in case of each one of a predetermined number of consecutively analyzed images does not result in an indication of possible tampering.

## SUMMARY

Embodiments of the present invention provide a method and an apparatus for detecting whether a camera is interfered and a video surveillance system. It is detected, through acuity and information entropy of a first image collected at any moment by a camera, whether the camera is interfered. The method, the apparatus, and the video surveillance system are applicable to a polling detection case. The present invention is defined in the independent claims. Preferred embodiments are defined in the dependent claims.

The embodiments of the present invention adopt the following technical solutions to achieve the foregoing objective:

With the method and the apparatus for detecting whether a camera is interfered and the video surveillance system provided in the present invention, it is detected, through acuity of a first image collected at any moment by a camera and information entropy of the first image, whether the camera is interfered.

Therefore, real-time image updating is not required and the method and the apparatus are applicable to a polling detection case.

## BRIEF DESCRIPTION OF DRAWINGS

FIG. 1 is a schematic flowchart of a method for detecting whether a camera is interfered according to an embodiment of the present invention;
FIG. 2 is a schematic flowchart of detecting whether a camera is interfered according to an embodiment of the present invention;
FIG. 3 is another schematic flowchart of detecting whether a camera is interfered according to an embodiment of the present invention;
FIG. 4 is another schematic flowchart of detecting whether a camera is interfered according to an embodiment of the present invention;
FIG. 5 is another schematic flowchart of detecting whether a camera is interfered according to an embodiment of the present invention;
FIG. 6 is another schematic flowchart of a method for detecting whether a camera is interfered according to an embodiment of the present invention;
FIG. 7 is a schematic flowchart of detecting whether a camera is interfered according to an embodiment of the present invention;
FIG. 8 is a schematic flowchart of obtaining a degree of similarity or a degree of dissimilarity between images according to an embodiment of the present invention;
FIG. 9 is another schematic flowchart of detecting whether a camera is interfered according to an embodiment of the present invention;
FIG. 10 is a schematic diagram of an apparatus for detecting whether a camera is interfered according to an embodiment of the present invention;
FIG. 11 is a schematic diagram of another apparatus for detecting whether a camera is interfered according to an embodiment of the present invention;
FIG. 12 is a schematic diagram of a second detecting unit according to an embodiment of the present invention;
FIG. 13 is a schematic diagram of another second detecting unit according to an embodiment of the present invention;
FIG. 14 is a schematic diagram of a first calculating subunit according to an embodiment of the present invention;
FIG. 15 is a schematic diagram of a second calculating subunit according to an embodiment of the present invention;
FIG. 16 is a schematic diagram of a third calculating module according to an embodiment of the present invention;
FIG. 17 is a schematic diagram of another third calculating module according to an embodiment of the present invention;
FIG. 18 is a schematic diagram of an apparatus for detecting whether a camera is interfered according to an embodiment of the present invention;
FIG. 19 is a schematic diagram of image blocks and distribution of corresponding weights according to an embodiment of the present invention; and

FIG. 20 is a schematic diagram of comparison results of image blocks according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

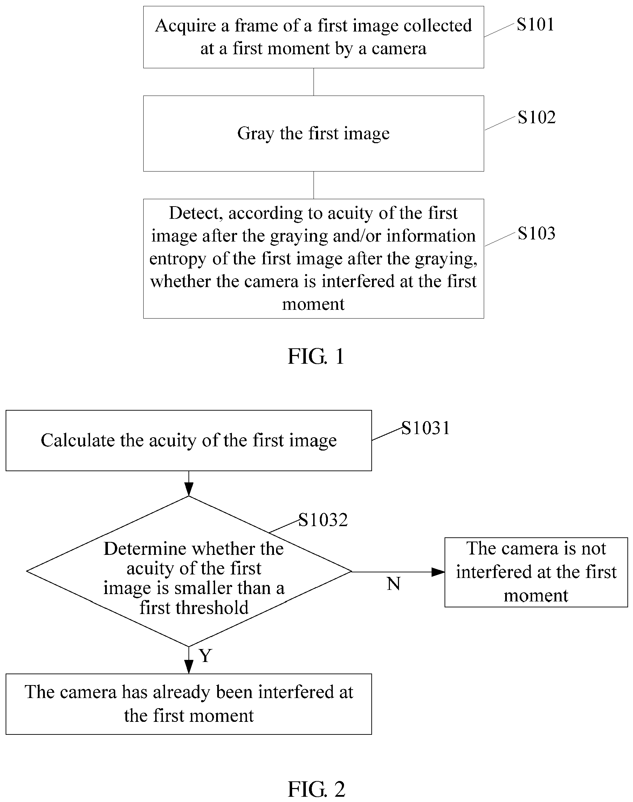

Referring to FIG. 1, an embodiment of the present invention provides a method for detecting whether a camera is interfered. The method includes:

S101. Acquire a frame of a first image collected at a first moment by a camera.

In the present invention, the first moment refers to any moment, and a frame of an image collected at the first moment by the camera is called the first image.

S102. Gray the first image.

The graying refers to converting a colored multi-channel image into a simplex gray-scale channel image, that is, all colors of the image are represented by different gray scales.

S103. Detect, according to acuity of the first image after the graying and/or information entropy of the first image after the graying, whether the camera is interfered at the first moment.

The acuity of the first image refers to a degree of edge sharpness of the image, and is an indicator that reflects planar definition of the image. It may be considered that the lower the acuity is, the more probably the camera is interfered; and the higher the acuity is, the more probably the camera is not interfered.

The information entropy of the first image refers to an amount of information included in the image, and reflects abundance of colors of the image. The more monotone the image is, the smaller the information entropy of the image is. It may be considered that the smaller the information entropy is, the more probably the camera is interfered; and the larger the information entropy is, the more probably the camera is not interfered.

Interference may be an adverse factor that affects camera surveillance, such as covering, moving, coating, or destroying.

Further, step S103 specifically includes: calculating the acuity of the first image and/or the information entropy of the first image; comparing the acuity of the first image with a first threshold to obtain a first comparison result, and/or comparing the information entropy of the first image with a second threshold to obtain a second comparison result; and determining, according to the first comparison result and/or the second comparison result, whether the camera is interfered.

The first threshold refers to a critical value for representing, by using the acuity, that the camera is interfered or not interfered, and the second threshold refers to a critical value for representing, by using the information entropy, that the camera is interfered or not interfered.

Specifically, how to determine, according to the acuity of the first image and the first threshold and/or the information entropy of the first image and the second threshold, whether the camera is interfered may be implemented in manners of the following embodiments:

Manner 1: Referring to FIG. 2, this step may include:

S1031. Calculate the acuity of the first image.

Exemplarily, a method for calculating acuity of an image may adopt an EAV algorithm, and its calculation formula is as follows:

$$E = \frac{\sum_a^b (df/dx)^2}{|f(b) - f(a)|}$$

where E is the acuity of the image, $f(x)$ is a gray-scale function of an edge point x of the image, $df/dx$ is a gray-scale variation rate of an edge of the image in a normal direction, and $f(b)-f(a)$ is an overall gray-scale variation in this direction.

Maximum acuity is taken as the acuity of the image.

S 1032. Determine whether the acuity of the first image is smaller than the first threshold.

If the acuity of the first image is smaller than the first threshold, it indicates that the camera has already been interfered at the first moment and in this case, the detection process ends.

Otherwise, that is, if the acuity of the first image is greater than or equal to the first threshold, it indicates that the camera is not interfered at the first moment and in this case, the detection process ends.

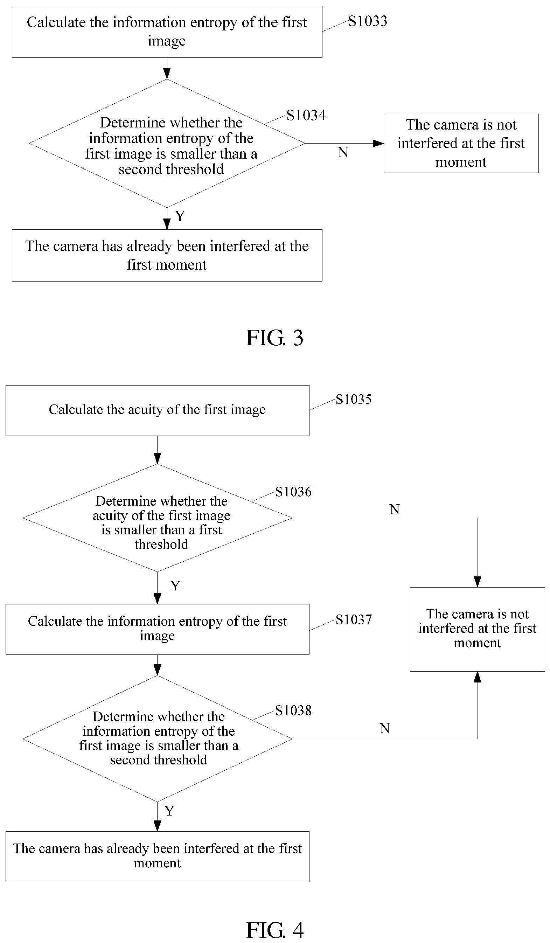

Manner 2: Referring to FIG. 3, this step may include:

S1033. Calculate the information entropy of the first image.

Exemplarily, a method for calculating information entropy of an image may be: first splitting the image into 256 orders, that is, 256 gray scales, and calculating a probability p(xi) of occurrence of each gray scale:

$$H(x) = E\big[I(xi)\big] = E\left[\log(\frac{1}{p(xi)})\right] = -\sum_{i=1}^{n} p(xi)\log(p(xi))(i=1,2...n)$$

where H(X) is the information entropy of the image, I(xi) is an event that an $i^{th}$ gray scale occurs, E[I(xi)] is expectancy of occurrence of the event I(xi), and n refers to 256 in this example.

S1034. Determine whether the information entropy of the first image is smaller than the second threshold.

If the information entropy of the first image is smaller than the second threshold, it indicates that the camera has already been interfered at the first moment and in this case, the detection process ends.

Otherwise, that is, if the information entropy of the first image is greater than or equal to the second threshold, it indicates that the camera is not interfered at the first moment and in this case, the detection process ends.

Manner 3: Referring to FIG. 4, this step may include:

S1035. Calculate the acuity of the first image.

For a specific method for calculating the acuity of the first image, reference may be made to step S1031.

S1036. Determine whether the acuity of the first image is smaller than the first threshold.

If the acuity of the first image is smaller than the first threshold, it indicates that the camera is probably interfered at the first moment and in this case, step S1037 needs to be further performed. Otherwise, that is, if the acuity of the first image is greater than or equal to the first threshold, it indicates that the camera is not interfered at the first moment and in this case, the detection process ends.

S1037. Calculate the information entropy of the first image.

For a specific method for calculating the information entropy of the first image, reference may be made to step S1033.

S1038. Determine whether the information entropy of the first image is smaller than the second threshold.

If the information entropy of the first image is smaller than the second threshold, it indicates that the camera has already been interfered at the first moment and in this case, the detection process ends.

Otherwise, that is, if the information entropy of the first image is greater than or equal to the second threshold, it indicates that the camera is not interfered at the first moment and in this case, the detection process ends.

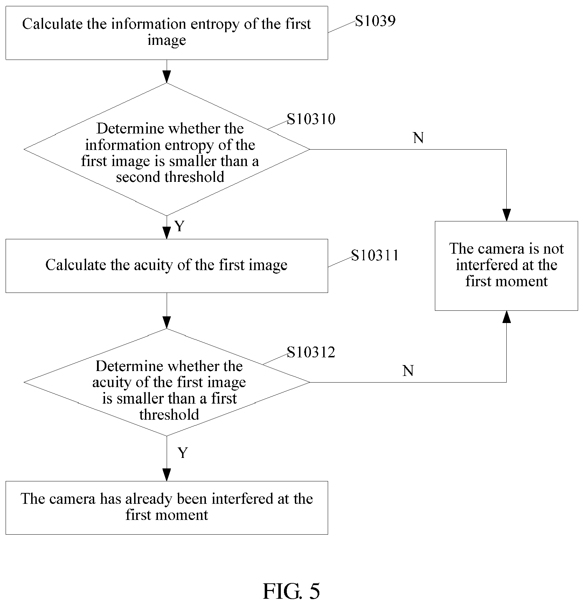

Manner 4: Referring to FIG. 5, step S103 may include:

S1039. Calculate the information entropy of the first image.

For a specific method for calculating the information entropy of the first image, reference may be made to step S1033.

S10310. Determine whether the information entropy of the first image is smaller than the second threshold.

If the information entropy of the first image is smaller than the second threshold, it indicates that the camera is probably interfered at the first moment and in this case, step S10311 needs to be further performed.

Otherwise, that is, if the information entropy of the first image is greater than or equal to the second threshold, it indicates that the camera is not interfered at the first moment and in this case, the detection process ends.

S10311. Calculate the acuity of the first image.

For a specific method for calculating the acuity of the first image, reference may be made to step S1031.

S10312. Determine whether the acuity of the first image is smaller than the first threshold.

If the acuity of the first image is smaller than the first threshold, it indicates that the camera has already been interfered at the first moment and in this case, the detection process ends.

Otherwise, that is, if the acuity of the first image is greater than or equal to the first threshold, it indicates that the camera is not interfered at the first moment and in this case, the detection process ends.

Definitely, a manner for determining whether the camera is interfered at the first moment is not limited to the foregoing provided manners. For example, due to different standards for assigning values for the first threshold and the second threshold, a case of equaling the first threshold and/or a case of equaling the second threshold may also indicate that the camera is probably or has already been interfered at the first moment.

With the method for detecting whether a camera is interfered provided in the present invention, it is detected, through acuity of a frame of a first image collected at any moment by a camera and/or information entropy of the first image, whether the camera is interfered. In this way, comparison with a reference image is not required and the detection can be completed with only a frame of a first image. Therefore, real-time image updating is not required and the method is applicable to a polling detection case.

Preferably, between step S102 and step S103, the method may further include: filtering out noise of the first image. Filtering out noise of an image can reduce influence of the noise of the image on calculation of acuity of the image and information entropy of the image.

The method provided in the foregoing embodiment is applicable to detection at any moment, and is also applicable to detection at a first moment, and for detection at a subsequent moment, reference may be made to solutions provided in the following embodiments.

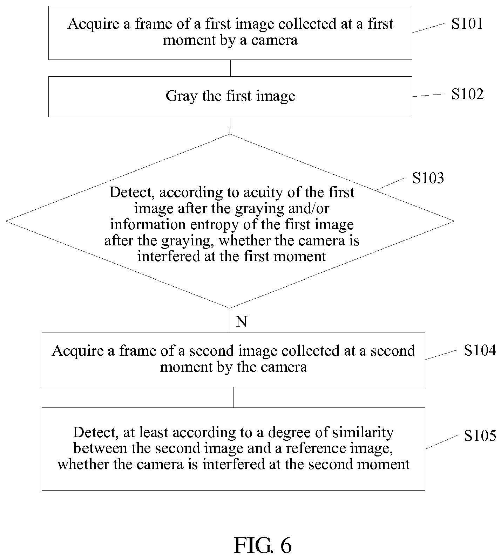

Referring to FIG. 6, an embodiment of the present invention provides a method for detecting whether a camera is interfered. When the foregoing detection result is that the camera is not interfered at the first moment, the method further includes:

S104. Acquire a frame of a second image collected at a second moment by the camera.

In the present invention, the second moment is any moment after the first moment, and a frame of an image collected at the second moment by the camera is called the second image.

S105. Detect, at least according to a degree of similarity between the second image and a reference image, whether the camera is interfered at the second moment.

The reference image is a frame of the first image or the second image when the camera is not interfered. Preferably, the reference image may be a frame of the first image when the camera is not interfered, and a hash fingerprint of the corresponding image block of the reference image keeps being updated.

The degree of the similarity between the second image and the reference image may be represented by the degree of the similarity or a degree of dissimilarity.

Optionally, this step is: Detect, only according to the degree of the similarity between the second image and the reference image, whether the camera is interfered at the second moment. This step specifically includes: calculating the degree of the similarity or the degree of dissimilarity between the second image and the reference image; and determining, according to the degree of the similarity or the degree of the dissimilarity between the second image and the reference image, whether the camera is interfered at the second moment.

Because the reference image is an image when the camera is not interfered, it may be considered that the higher the degree of the similarity between the second image and the reference image is, that is, the higher the degree of similarity between the second image and the reference image is or the lower the degree of the dissimilarity between the second image and the reference image is, the more probably the camera is not interfered; and the lower the degree of similarity between the second image and the reference image is or the higher the degree of the dissimilarity between the second image and the reference image is, the more probably the camera is interfered.

To obtain a more accurate detection result, preferably, this step is: Detect, according to the degree of the similarity between the second image and the reference image and according to an acuity value difference between the second image and the reference image, whether the camera is interfered at the second moment. This step may specifically include: calculating the degree of the similarity or the degree of the dissimilarity between the second image and the reference image, and the acuity value difference between the second image and the reference image; and determining, according to the degree of the similarity or the degree of the dissimilarity between the second image and the reference image and according to the acuity value difference between the second image and the reference image, whether the camera is interfered at the second moment.

Because the reference image is an image when the camera is not interfered, it may be considered that the greater the acuity value difference between the second image and the reference image is, the more probably the camera is interfered; and the smaller the acuity value difference between the second image and the reference image is, the more probably the camera is not interfered.

In the foregoing two solutions, the step of calculating the degree of the similarity or the degree of the dissimilarity between the second image and the reference image is required, and the step is described in detail in the following.

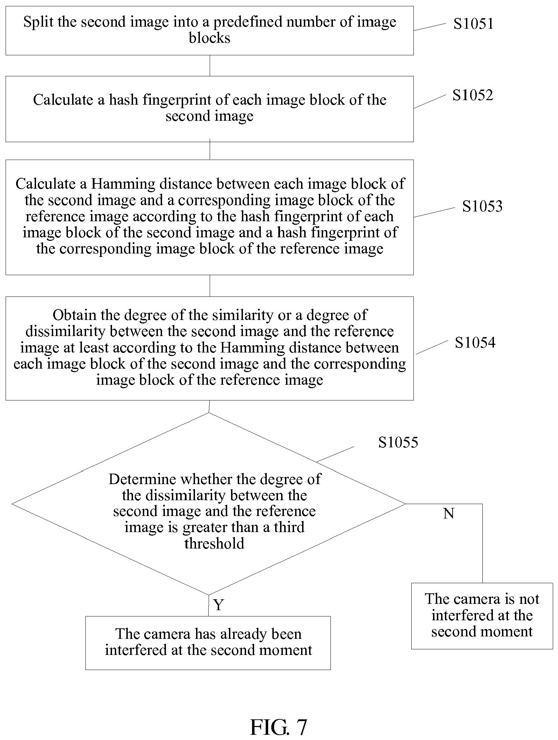

Referring to FIG. 7, the step of calculating the degree of the similarity or the degree of the dissimilarity between the second image and the reference image may include:

S1051. Split the second image into a predefined number of image blocks.

Exemplarily, the second image may be split into 36 blocks. That is, a height of each image block is equal to one sixth a height of the second image, and a width of each image block is equal to one sixth a width of the second image. This facilitates subsequent calculation and comparison for each image block.

S1052. Calculate a hash fingerprint of each image block of the second image.

A hash fingerprint is a string of characters used to identify an image.

Exemplarily, in a first step, a size is reduced. Each image block split from the second image in step S1051 is reduced to a size of 8x8 pixels. That is, a total of 64 pixels are included. In this case, the second image is formed by 36 image blocks, and each image block includes 64 pixels.

In a second step, a color is simplified. Each image block is converted into 64 orders, that is, 64 gray scales. That is to say, there are only 64 gray scales for all pixels in total, and each pixel corresponds to one gray scale among the 64 gray scales.

In a third step, an average value is calculated. An average value of the gray scales of all the 64 pixels is calculated.

In a fourth step, the gray scales of the pixels are compared, and a gray scale of each pixel is compared with the average value. For a pixel whose gray scale is greater than or equal to the average value, its corresponding position is marked as 1; and for a pixel whose gray scale is smaller than the average value, its corresponding position is marked as 0.

In a fifth step, a hash fingerprint is calculated. Results marked for various pixels in the fourth step are combined to form a 64-bit integer, that is, a hash fingerprint of each image block split in S1051. S1053. Calculate a Hamming distance between each image block of the second image and a corresponding image block of the reference image according to the hash fingerprint of each image block of the second image and a hash fingerprint of the corresponding image block of the reference image.

The hash fingerprint of the corresponding image block of the reference image may be a hash fingerprint of a corresponding image block of a frame of the first image when the camera is not interfered at the first moment, and may also be a hash fingerprint of a corresponding image block of a frame of the second image when the camera is not interfered at the second moment. Preferably, the hash fingerprint of the corresponding image block of the reference image may be an updated hash fingerprint of a frame of the first image when the camera is not interfered at the first moment. A Hamming distance is the number of characters that are different between corresponding positions of two strings of characters with a same length, where the number of characters is obtained by performing comparison one by one on a hash fingerprint of each image block that corresponds to two images.

Exemplarily, that each hash fingerprint is an 8-bit integer is used as an example, and if a hash fingerprint of the second image is 10101101 and a hash fingerprint of the corresponding image block of the reference image is 00101100, a Hamming distance between the two images is 2. S1054. Obtain the degree of the similarity or the degree of the dissimilarity between the second image and the reference image at least according to the Hamming distance between each image block of the second image and the corresponding image block of the reference image.

Optionally, step S1054 is: Obtain the degree of the similarity or the degree of the dissimilarity between the second image and the reference image only according to the Hamming distance between each image block of the second image and the corresponding image block of the reference image. It may be considered that the greater the Hamming distance between each image block of the second image and the corresponding image block of the reference image is, the greater the dissimilarity between the second image and the reference image is or the smaller the similarity between the second image and the reference image is, and the more probably the camera is interfered at the second moment; and the smaller the Hamming distance between each image block of the second image and the corresponding image block of the reference image is, the smaller the dissimilarity between the second image and the reference image is or the greater the similarity between the second image and the reference image is, and the more probably the camera is not interfered at the second moment.

Preferably, step S1054 is: Classify, according to the Hamming distance between each image block of the second image and the corresponding image block of the reference image, a similarity threshold, and a dissimilarity threshold, various image blocks of the reference image or the second image into a similar image block, a dissimilar image block, and an image block that varies normally; and obtain the degree of the similarity or the degree of the dissimilarity between the second image and the reference image through calculation according to a sum of weights that correspond to all the dissimilar image blocks and/or a sum of weights that correspond to all the similar image blocks, and a sum of weights that correspond to all the image blocks. It may be considered that the lower the degree of the dissimilarity between the second image and the reference image is or the higher the degree of the similarity between the second image and the reference image is, the more probably the camera is not interfered at the second moment;

and the higher the degree of the dissimilarity between the second image and the reference image is or the lower the degree of the similarity between the second image and the reference image is, the more probably the camera is interfered at the second moment.

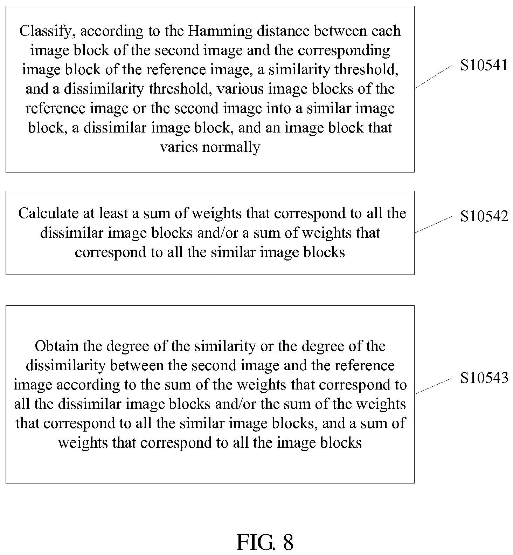

To implement the preferable solution of step S1054, exemplarily, referring to FIG. 8, step S1054 may include:

S10541. Classify, according to the Hamming distance between each image block of the second image and the corresponding image block of the reference image, the similarity threshold, and the dissimilarity threshold, various image blocks of the reference image or the second image into a similar image block, a dissimilar image block, and an image block that varies normally (which may be called three types of image blocks).

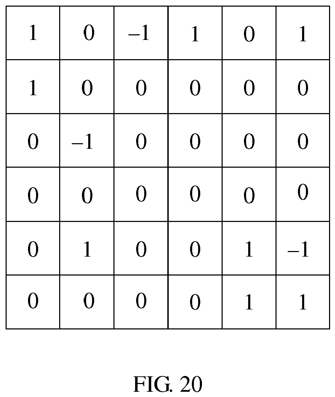

Exemplarily, referring to FIG. 20, when the Hamming distance of a certain image block is smaller than the similarity threshold, the image block is a similar image block, a hash fingerprint of the corresponding image block of the reference image at this position is updated to the hash fingerprint of the second image, and a position that corresponds to the image block in the reference image or the second image is marked as 0; or when the Hamming distance is greater than the dissimilarity threshold, the image block is a dissimilar image block, an original fingerprint of the reference image at this position is reserved, and a position that corresponds to the image block in the reference image or the second image is marked as 1; or when the Hamming distance is between the similarity threshold and the dissimilarity threshold, the image block is an image block that varies normally, which indicates that the image block does not participate in subsequent similarity calculation, an original fingerprint of the reference image at this position is reserved, and a position that corresponds to the image block in the reference image or the second image is marked as -1.

A hash fingerprint of the image block marked as 0 in the reference image is updated, because the reference image may serve as a reference image of a next frame of an image, an area of the image block is a non-interfered area, and a hash fingerprint of the corresponding image block of the reference image at this position is updated to the hash fingerprint of the second image so as to adapt to an environmental change in real time; a hash fingerprint of the image block marked as 1 in the reference image is reserved, because the reference image may serve as a reference image of a next frame of an image, an area of the image block is an interfered area, and the fingerprint when no interference occurs is reserved so as to serve as a basis for subsequent interference recovery and for continuing to determine whether the camera is interfered; and a hash fingerprint of the image block marked as -1 in the reference image is reserved, because the reference image may serve as a reference image of a next frame of an image, an area of the image block is a probably-interfered area in which interference does not yet occur, the area is ultimately determined as an interfered area if interference continues to occur, and the fingerprint when no interference occurs is reserved so as to serve as a basis for continuing to determine whether the camera is interfered.

S10542. Calculate at least the sum of the weights that correspond to all the dissimilar image blocks and/or the sum of the weights that correspond to all the similar image blocks.

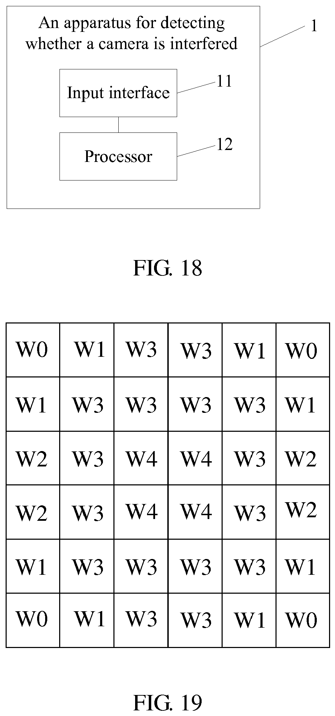

Step S10542 is described in detail with reference to weight distribution of various image blocks shown in FIG. 19 and distribution of three types of image blocks shown in FIG. 20. FIG. 19 and FIG. 20 may correspond to the reference image, or may correspond to the second image. Then the calculating the sum of the weights that correspond to all the dissimilar image blocks and/or the sum of the weights that correspond to all the similar image blocks may be for the reference image or for the second image. In FIG. 19, WO, W1, W2, W3, and W4 indicate weights of various image blocks, where the weights are preset according to importance of positions of the image blocks for the entire image. Exemplarily, WO, W1, W2, W3, and W4 may increase in sequence. Because three types of image blocks of the reference image or the second image are marked with 0, 1, and -1 (as shown in FIG. 20) in step S10541, the sum of the weights that correspond to all the dissimilar image blocks is accumulation of all weights of image blocks whose corresponding positions are marked as 1; and the sum of the weights that correspond to all the similar image blocks is accumulation of all weights of image blocks whose corresponding positions are marked as 0.

In addition, for clear description, in this embodiment, the sum of the weights that correspond to all the dissimilar image blocks (the image blocks marked with 1) is marked with CW, and the sum of the weights that correspond to all the similar image blocks (the image blocks marked with 0) is marked with EW. In addition, a sum of weights that correspond to all the image blocks (the image blocks marked with -1) that vary normally is marked with NW.

Exemplarily, the sum of the weights that correspond to all the dissimilar image blocks shown in FIG. 20 is accumulation of all the weights of the image blocks whose corresponding positions are marked as 1, that is, CW = WO + W3 + WO + W1 + W3 + W3 + W1 + WO.

Optionally, step S10542 is: Calculate only the sum (CW) of the weights that correspond to all the dissimilar image blocks and/or the sum (EW) of the weights that correspond to all the similar image blocks.

Definitely, the sum (NW) of the weights that correspond to all the image blocks that vary normally may further be calculated.

S10543. Obtain the degree of the similarity or the degree of the dissimilarity between the second image and the reference image according to the sum of the weights that correspond to all the dissimilar image blocks and/or the sum of the weights that correspond to all the similar image blocks, and the sum of the weights that correspond to all the image blocks.

The sum of the weights that correspond to all the image blocks is accumulation of the weights that correspond to all the image blocks shown in FIG. 19, and is marked with *WEIGHT_SUM* in this embodiment. This numerical value may be stored in advance and does not need to be calculated. Exemplarily, the degree of the dissimilarity R1 between the second image and the reference image may be calculated as follows:

$$R1 = \frac{CW}{WEIGHT\_SUM}.$$

Exemplarily again, the degree of the dissimilarity R1 between the second image and the reference image may be calculated as follows:

$$R1 = \frac{CW}{WEIGHT\_SUM - NW}.$$

Exemplarily, the degree of the similarity R2 between the second image and the reference image may also be calculated, and its calculation method may be as follows:

$$R2 = \frac{EW}{WEIGHT\_SUM}.$$

Exemplarily again, a method for calculating the degree of the similarity R2 between the second image and the reference image may be as follows:

$$R2 = \frac{EW}{WEIGHT\_SUM - NW}.$$

After the degree of the similarity or the degree of the dissimilarity between the second image and the reference image is obtained through calculation in S1054, a detection result may be obtained according to comparison of a corresponding threshold with the degree of the similarity or the degree of the dissimilarity between the second image and the reference image. In this embodiment of the present invention, a detailed description is made by using an example that the detection result is obtained by comparing the degree of the dissimilarity with the threshold.

S1055. Determine whether the degree of the dissimilarity between the second image and the reference image is greater than a third threshold.

The third threshold refers to a critical value for representing, by using the degree of the dissimilarity between the second image and the reference image, that the camera is interfered or not interfered.

If the degree of the dissimilarity between the second image and the reference image is greater than the third threshold, the camera has been probably interfered at the second moment. In this case, the detection process may end or steps S1056 to S1057 may be performed to further determine whether the camera is interfered.

Otherwise, if the degree of the dissimilarity between the second image and the reference image is smaller than or equal to the third threshold, the camera is not interfered at the second moment and in this case, the detection process ends.

Definitely, a manner for determining whether the camera is interfered at the second moment is not limited to the foregoing provided manners. For example, due to different standards for assigning a value for the third threshold, a case of equaling the third threshold may also indicate that the camera has already been interfered at the second moment.

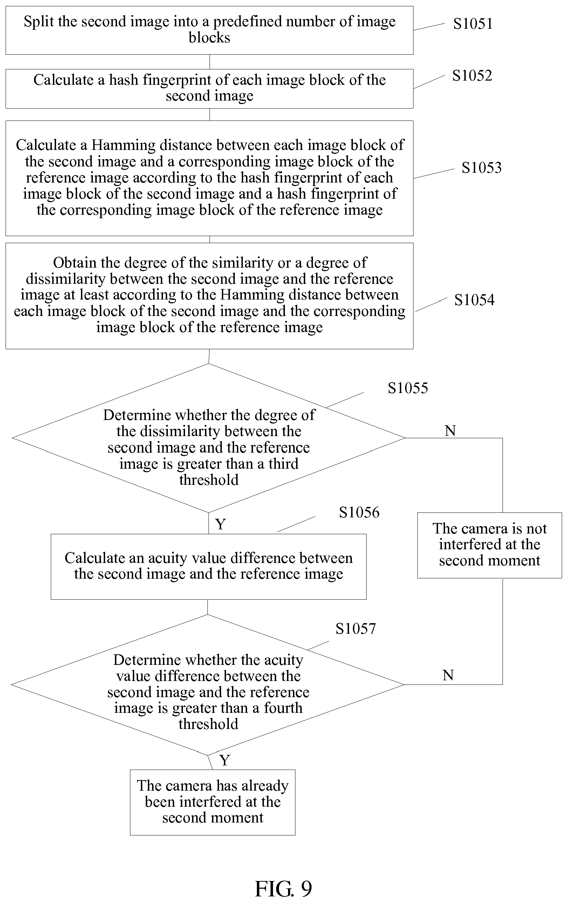

To implement the preferable solution of step S105, referring to FIG. 9, step S105 may include: S1056. Calculate the acuity value difference between the second image and the reference image. For a method for calculating acuity of the second image and acuity of the reference image, reference may be made to the method for calculating the acuity of the first image in step S1031, which is not described herein again.

S1057. Determine whether the acuity value difference between the second image and the reference image is greater than a fourth threshold.

The fourth threshold refers to a critical value for representing, by using the acuity value difference between the second image and the reference image, that the camera is interfered or not interfered.

If the acuity value difference between the second image and the reference image is greater than the fourth threshold, it is determined that the camera has already been interfered at the second moment and in this case, the detection process ends.

If the acuity value difference between the second image and the reference image is smaller than or equal to the fourth threshold, the camera is not interfered at the second moment and in this case, the detection process ends.

Definitely, a manner for determining whether the camera is interfered at the second moment is not limited to the foregoing provided manners. For example, due to different standards for assigning a value for the fourth threshold, a case of equaling the fourth threshold may also indicate that the camera has already been interfered at the second moment.

It is further determined, through the acuity value difference between the second image and the reference image, whether the camera is interfered at the second moment, thereby reducing a misreporting rate of a detection result.

With the method for detecting whether a camera is interfered provided in this embodiment of the present invention, when the camera is not interfered at a first moment, it is detected, through a degree of similarity between a second image and a reference image, whether the camera is interfered at a second moment, where the reference image is a frame of a first image or a second image when the camera is not interfered. The method is applicable to a real-time detection case. Meanwhile, it may further be detected, according to an acuity value difference between the second image and the reference image, whether the camera is interfered at the second moment. In this way, a misreporting rate of a detection result is reduced through multiple times of detection.

In the following, an embodiment of the present invention provides an apparatus that corresponds to the foregoing method for detecting whether a camera is interfered. It should be noted that for each functional unit included in the following apparatus, reference may be made to a corresponding step in the foregoing method, and therefore in the following embodiment, each functional unit of the apparatus is not described in detail.

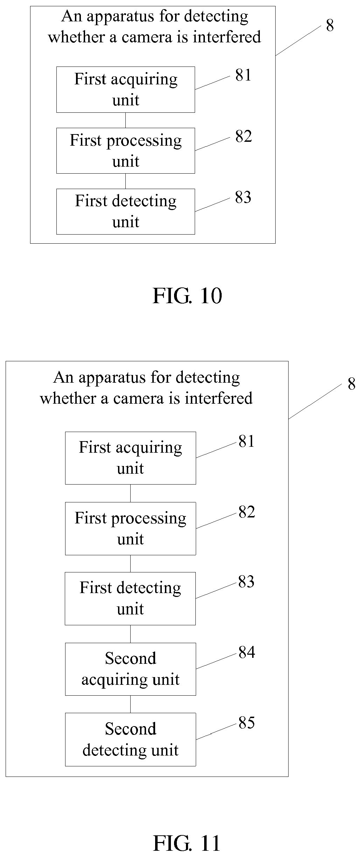

Referring to FIG. 10, an embodiment of the present invention provides an apparatus 8 for detecting whether a camera is interfered, which includes:

A first acquiring unit 81 is configured to acquire a frame of a first image collected at a first moment by a camera.

In the present invention, the first moment refers to any moment, and a frame of an image collected at the first moment by the camera is called the first image.

A first processing unit 82 is configured to gray the first image.

A first detecting unit 83 is configured to detect, according to acuity of the first image after the graying performed by the first processing unit 82 and/or information entropy of the first image after the graying, whether the camera is interfered at the first moment.

The acuity of the first image refers to a degree of edge sharpness of the image, and is an indicator that reflects planar definition of the image. It may be considered that the lower the acuity is, the more probably the camera is interfered; and the higher the acuity is, the more probably the camera is not interfered.

The information entropy of the first image refers to an amount of information included in the image, and reflects abundance of colors of the image. The more monotone the image is, the smaller the information entropy of the image is. It may be considered that the smaller the information entropy is, the more probably the camera is interfered; and the larger the information entropy is, the more probably the camera is not interfered.

Interference may be an adverse factor that affects camera surveillance, such as covering, moving, coating, or destroying.

Further, the first detecting unit 83 is specifically configured to calculate the acuity of the first image and/or the information entropy of the first image, compare the acuity of the first image with a first threshold to obtain a first comparison result, and/or compare the information entropy of the first image with a second threshold to obtain a second comparison result, and determine, according to the first comparison result and/or the second comparison result, whether the camera is interfered. The first threshold refers to a critical value for representing, by using the acuity, that the camera is interfered or not interfered, and the second threshold refers to a critical value for representing, by using the information entropy, that the camera is interfered or not interfered.

With the apparatus for detecting whether a camera is interfered provided in the present invention, a first acquiring unit acquires a frame of a first image collected at any moment by a camera, and a first detecting unit detects, through acuity of the first image and/or information entropy of the first image, whether the camera is interfered. In this way, comparison with a reference image is not required and the detection can be completed with only a frame of a first image. Therefore, real-time image updating is not required and the apparatus is applicable to a polling detection case. Preferably, between the first processing unit 82 and the first detecting unit 83, the foregoing apparatus may further include:

a second processing unit, configured to filter out noise of the first image.

Filtering out noise of an image can reduce influence of the noise of the image on calculation of acuity of the image and information entropy of the image.

Referring to FIG. 11, an embodiment of the present invention provides an apparatus 8 for detecting whether a camera is interfered. When the foregoing detection result is that the camera is not interfered at the first moment, the apparatus 8 further includes:

> A second acquiring unit 84 is configured to acquire a frame of a second image collected at a second moment by the camera.

In the present invention, the second moment is any moment after the first moment, and a frame of an image collected at the second moment by the camera is called the second image.

A second detecting unit 85 is configured to detect, at least according to a degree of similarity between the second image acquired by the second acquiring unit 84 and a reference image, whether the camera is interfered at the second moment.

The reference image is a frame of the first image or the second image when the camera is not interfered. Preferably, the reference image may be a frame of the first image when the camera is not interfered, and a hash fingerprint of the corresponding image block of the reference image keeps being updated.

The degree of the similarity between the second image and the reference image may be represented by the degree of the similarity or a degree of dissimilarity.

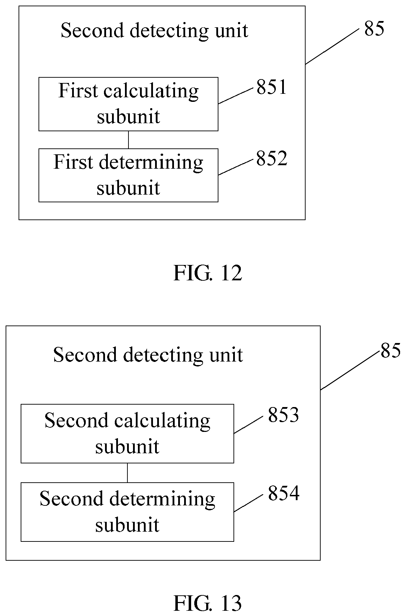

Optionally, the second detecting unit 85 is configured to detect, only according to the degree of the similarity between the second image and the reference image, whether the camera is interfered at the second moment. Referring to FIG. 12, this unit specifically includes:

> a first calculating subunit 851, configured to calculate the degree of the similarity or the degree of dissimilarity between the second image and the reference image; and
> a first determining subunit 852, configured to determine, according to the degree of the similarity or the degree of the dissimilarity between the second image and the reference image, whether the camera is interfered at the second moment, where the degree of the similarity or the degree of the dissimilarity is obtained by the first calculating subunit 851.

Because the reference image is an image when the camera is not interfered, it may be considered that the higher the degree of the similarity between the second image and the reference image is, that is, the higher the degree of similarity between the second image and the reference image is or the lower the degree of the dissimilarity between the second image and the reference image is, the more probably the camera is not interfered; and the lower the degree of similarity between the second image and the reference image is or the higher the degree of the dissimilarity between the second image and the reference image is, the more probably the camera is interfered.

To obtain a more accurate detection result, preferably, the second detecting unit 85 is configured to detect, according to the degree of the similarity between the second image and the reference image and according to an acuity value difference between the second image and the reference image, whether the camera is interfered at the second moment. Referring to FIG. 13, this unit may specifically include:

> a second calculating subunit 853, configured to calculate the degree of the similarity or the degree of the dissimilarity between the second image and the reference image, and the acuity value difference between the second image and the reference image; and
> a second determining subunit 854, configured to determine, according to the degree of the similarity or the degree of the dissimilarity between the second image and the reference image and according to the acuity value difference between the second image and the reference image, whether the camera is interfered at the second moment, where the degree of the similarity or the degree of the dissimilarity and the acuity value difference are obtained by the second calculating subunit 853.

Because the reference image is an image when the camera is not interfered, it may be considered that the greater the acuity value difference between the second image and the reference image is, the more probably the camera is interfered; and the smaller the acuity value difference between the second image and the reference image is, the more probably the camera is not interfered.

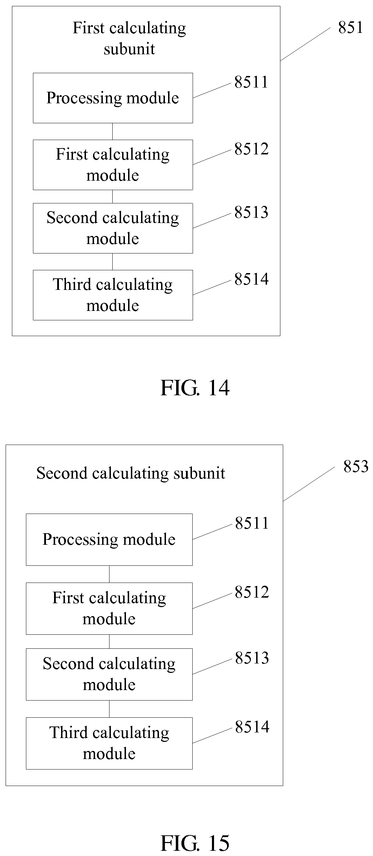

In the foregoing two solutions, both the first calculating subunit 851 and the second calculating subunit 853 are configured to calculate the degree of the similarity or the degree of the dissimilarity between the second image and the reference image. This part is described in detail in the following. The first calculating subunit 851 shown in FIG. 14 or the second calculating subunit 853 shown in FIG. 15 may specifically include:

A processing module 8511 is configured to split the second image acquired by the second acquiring unit into a predefined number of image blocks.

A first calculating module 8512 is configured to calculate a hash fingerprint of each image block that is obtained by the processing module 8511.

A hash fingerprint is a string of characters used to identify an image.

A second calculating module 8513 is configured to calculate a Hamming distance between each image block of the second image and a corresponding image block of the reference image according to the hash fingerprint of each image block that is obtained by the first calculating module 8512 and a hash fingerprint of the corresponding image block of the reference image.

The hash fingerprint of the corresponding image block of the reference image may be a hash fingerprint of a corresponding image block of a frame of the first image when the camera is not interfered at the first moment, and may also be a hash fingerprint of a corresponding image block of a frame of the second image when the camera is not interfered at the second moment. Preferably, the hash fingerprint of the corresponding image block of the reference image may be an updated hash fingerprint of a frame of the first image when the camera is not interfered at the first moment. A Hamming distance is the number of characters that are different between corresponding positions of two strings of characters with a same length, where the number of characters is obtained by performing comparison one by one on a hash fingerprint of each image block that corresponds to two images.

A third calculating module 8514 is configured to obtain the degree of the similarity or the degree of the dissimilarity between the second image and the reference image at least according to the Hamming distance between each image block of the second image and the corresponding image block of the reference image, where the Hamming distance is obtained by the second calculating module 8513.

Optionally, the third calculating module 8514 is configured to obtain the degree of the similarity or the degree of the dissimilarity between the second image and the reference image only according to the Hamming distance between each image block of the second image and the corresponding image block of the reference image. It may be considered that the greater the Hamming distance between each image block of the second image and the corresponding image block of the reference image is, the greater the dissimilarity between the second image and the reference image is or the smaller the similarity between the second image and the reference image is, and the more probably the camera is interfered at the second moment; and the smaller the Hamming distance between each image block of the second image and the corresponding image block of the reference image is, the smaller the dissimilarity between the second image and the reference image is or the greater the similarity between the second image and the reference image is, and the more probably the camera is not interfered at the second moment.

Preferably, the third calculating module 8514 is configured to classify, according to the Hamming distance between each image block of the second image and the corresponding image block of the reference image, a similarity threshold, and a dissimilarity threshold, various image blocks of the reference image or the second image into a similar image block, a dissimilar image block, and an image block that varies normally; and obtain the degree of the similarity or the degree of the dissimilarity between the second image and the reference image through calculation according to a sum of weights that correspond to all the dissimilar image blocks and/or a sum of weights that correspond to all the similar image blocks, and a sum of weights that correspond to all the image blocks. It may be considered that the lower the degree of the dissimilarity between the second image and the reference image is or the higher the degree of the similarity between the second image and the reference image is, the more probably the camera is not interfered at the second moment; and the higher the degree of the dissimilarity between the second image and the reference image is or the lower the degree of the similarity between the second image and the reference image is, the more probably the camera is interfered at the second moment.

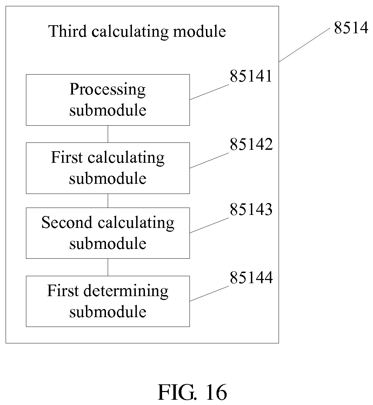

To implement the preferable solution of the foregoing third calculating module 8514, exemplarily, referring to FIG. 16, the third calculating module 8514 may include:

A processing submodule 85141 is configured to classify, according to the Hamming distance between each image block of the second image and the corresponding image block of the reference image, the similarity threshold, and the dissimilarity threshold, various image blocks of the reference image or the second image into a similar image block, a dissimilar image block, and an image block that varies normally, where the Hamming distance is obtained by the second calculating module 8513.

A first calculating submodule 85142 is configured to calculate, according to the similar image block, the dissimilar image block, and the image block that varies normally, at least the sum of the weights that correspond to all the dissimilar image blocks and/or the sum of the weights that correspond to all the similar image blocks, where the similar image block, the dissimilar image block, and the image block are obtained by the processing submodule 85141.

Optionally, the first calculating submodule 85142 is configured to calculate only the sum of the weights that correspond to all the dissimilar image blocks and/or the sum of the weights that correspond to all the similar image blocks.

Definitely, further, this module may further be configured to calculate the sum (NW) of the weights that correspond to all the image blocks that vary normally.

A second calculating submodule 85143 is configured to obtain the degree of the similarity or the degree of the dissimilarity between the second image and the reference image according to the sum of the weights that correspond to all the dissimilar image blocks and/or the sum of the weights that correspond to all the similar image blocks, and the sum of the weights that correspond to all the image blocks, where the sum of the weights that correspond to all the dissimilar image blocks and/or the sum of the weights that correspond to all the similar image blocks, and the sum of the weights that correspond to all the image blocks are obtained by the first calculating submodule 85142.

After the second calculating submodule 85143 obtains the degree of the similarity or the degree of the dissimilarity between the second image and the reference image, a detection result may be obtained according to comparison of a corresponding threshold with the degree of the similarity or the degree of the dissimilarity between the second image and the reference image. In this embodiment of the present invention, a detailed description is made by using an example that the detection result is obtained by comparing the degree of the dissimilarity with the threshold.

A first determining submodule 85144 is configured to determine, according to the degree of the dissimilarity between the second image and the reference image, whether the degree of the dissimilarity between the second image and the reference image is greater than a third threshold, where the degree of the dissimilarity is obtained by the second calculating submodule 85143.

The third threshold refers to a critical value for representing, by using the degree of the dissimilarity between the second image and the reference image, that the camera is interfered or not interfered.

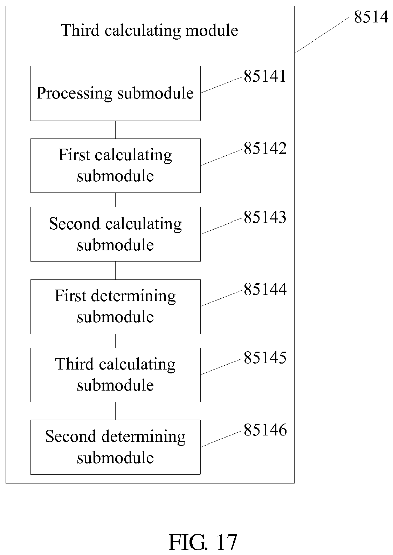

To implement the preferable solution of the foregoing second detecting unit 85, referring to FIG. 17, the third calculating module 8514 in the second calculating subunit 853, when a determining result of the first determining submodule 85144 is that the camera is probably interfered at the second moment, the third calculating module 8514 may further include:

a third calculating submodule 85145, configured to calculate the acuity value difference between the second image and the reference image; and

a second determining submodule 85146, configured to determine, according to the acuity value difference between the second image and the reference image, whether the acuity value difference between the second image and the reference image is greater than a fourth threshold, where the acuity value difference is obtained by the third calculating submodule 85145.

The fourth threshold refers to a critical value for representing, by using the acuity value difference between the second image and the reference image, that the camera is interfered or not interfered.

It is further determined, through the acuity value difference between the second image and the reference image, whether the camera is interfered at the second moment, thereby reducing a misreporting rate of a detection result.

With the apparatus for detecting whether a camera is interfered provided in this embodiment of the present invention, when the camera is not interfered at a first moment, a second acquiring unit acquires a frame of a second image collected at a second moment by the camera; and a second detecting unit detects, through a degree of similarity between the second image and a reference image, whether the camera is interfered at the second moment, where the reference image is a frame of a first image or a second image when the camera is not interfered. The apparatus is applicable to a real-time detection case. Meanwhile, it may further be detected, according to an acuity value difference between the second image and the reference image, whether the camera is interfered at the second moment. In this way, a misreporting rate of a detection result is reduced through multiple times of detection.

In the following, an embodiment of the present invention further provides an apparatus that corresponds to the foregoing method.

As shown in FIG. 18, the present invention provides an apparatus 1 for detecting whether a camera is interfered, and which includes: an input interface 11 and a processor 12 that connects to the input interface.

The input interface 11 connects to an output interface of a camera, and is configured to acquire a frame of a first image collected at a first moment by the camera.

The processor 12 is configured to gray the first image acquired through the input interface.

The processor 12 is configured to detect, according to acuity of the first image after the graying and/or information entropy of the first image after the graying, whether the camera is interfered at the first moment.

Further, the processor 12 is specifically configured to calculate the acuity of the first image and/or the information entropy of the first image; compare the acuity of the first image with a first threshold to obtain a first comparison result, and/or compare the information entropy of the first image with a second threshold to obtain a second comparison result; and determine, according to the first comparison result and/or the second comparison result, whether the camera is interfered. The first threshold refers to a critical value for representing, by using the acuity, that the camera is interfered or not interfered, and the second threshold refers to a critical value for representing, by using the information entropy, that the camera is interfered or not interfered.

Optionally, the processor 12 is further configured to filter out noise of the first image.

Further, the input interface 11 is further configured to, when the camera is not interfered at the first moment, acquire a frame of a second image collected at a second moment by the camera, where the second moment is any moment after the first moment.

The processor 12 is further configured to detect, at least according to a degree of similarity between the second image and a reference image, whether the camera is interfered at the second moment, where the reference image is a frame of an image when the camera is not interfered.

The processor 12 is specifically configured to detect, only according to the degree of the similarity between the second image and the reference image, whether the camera is interfered at the second moment; or specifically configured to detect, according to the degree of the similarity between the second image and the reference image and according to an acuity value difference between the second image and the reference image, whether the camera is interfered at the second moment.

The processor 12 is specifically configured to calculate the degree of the similarity or a degree of dissimilarity between the second image and the reference image; and determine, according to the degree of the similarity or the degree of the dissimilarity between the second image and the reference image, whether the camera is interfered at the second moment; or specifically configured to calculate the degree of the similarity or a degree of dissimilarity between the second image and the reference image, and the acuity value difference between the second image and the reference image; and determine, according to the degree of the similarity or the degree of the dissimilarity between the second image and the reference image and according to the acuity value difference between the second image and the reference image, whether the camera is interfered at the second moment.

Optionally, the processor 12 is configured to split the second image into a predefined number of image blocks; calculate a hash fingerprint of each image block of the second image; calculate a Hamming distance between each image block of the second image and a corresponding image block of the reference image according to the hash fingerprint of each image block of the second image and a hash fingerprint of the corresponding image block of the reference image; and obtain the degree of the similarity or the degree of the dissimilarity between the second image and the reference image at least according to the Hamming distance between each image block of the second image and the corresponding image block of the reference image.

Optionally, the processor 12 is configured to classify, according to the Hamming distance between each image block of the second image and the corresponding image block of the reference image, a similarity threshold, and a dissimilarity threshold, various image blocks of the reference image or the second image into a similar image block, a dissimilar image block, and an image block that varies normally; calculate at least a sum of weights that correspond to all the dissimilar image blocks and/or a sum of weights that correspond to all the similar image blocks; and obtain the degree of the similarity or the degree of the dissimilarity between the second image and the reference image according to the sum of the weights that correspond to all the dissimilar image blocks and/or the sum of the weights that correspond to all the similar image blocks, and a sum of weights that correspond to all the image blocks.

With the apparatus for detecting whether a camera is interfered provided in this embodiment of the present invention, a frame of a first image collected at any moment by a camera is acquired through an input interface, and a processor detects, through acuity of the first image and/or information entropy of the first image, whether the camera is interfered. In this way, comparison with a reference image is not required and the detection can be completed with only a frame of a first image. Therefore, real-time image updating is not required and the apparatus is applicable to a polling detection case. When the camera is not interfered at a first moment, a second image is acquired through the input interface; and the processor detects, through a degree of similarity between the second image and a reference image, whether the camera is interfered at a second moment, where the reference image is a frame of the first image or the second image when the camera is not interfered. The apparatus is applicable to a real-time detection case. Meanwhile, the processor may further detect, according to an acuity value difference between the second image and the reference image, whether the camera is interfered at the second moment. In this way, a misreporting rate of a detection result is reduced through multiple times of detection.

An embodiment of the present invention provides a video surveillance system, which includes a camera and any of the apparatuses for detecting whether a camera is interfered provided in the embodiments of the present invention.

With the video surveillance system provided in this embodiment of the present invention, the camera is configured to collect a frame of a first image at any moment; and the apparatus for detecting whether a camera is interfered is configured to acquire the frame of the first image collected at any moment by the camera, and detect, through acuity of the first image and/or information entropy of the first image, whether the camera is interfered. In this way, comparison with a reference image is not required and the detection can be completed with only a frame of a first image. Therefore, real-time image updating is not required and the system is applicable to a polling detection case. When the camera is not interfered at a first moment, the apparatus for detecting whether a camera is interfered acquires a second image collected by the camera and detects, through a degree of similarity between the second image and a reference image, whether the camera is interfered at a second moment, where the reference image is a frame of the first image or the second image when the camera is not interfered. The video surveillance system is applicable to a real-time detection case. Meanwhile, the apparatus for detecting whether a camera is interfered may further detect, according to an acuity value difference between the second image and the reference image, whether the camera is interfered at the second moment. In this way, a misreporting rate of a detection result is reduced through multiple times of detection.

The foregoing descriptions are merely specific embodiments of the present invention, but are not intended to limit the protection scope of the present invention. Any variation or replacement readily figured out by a person skilled in the art within the scope of the claims shall all fall within the protection scope of the present invention. Therefore, the protection scope of the present invention shall be subject to the protection scope of the claims.

**Claims**

1. A method for detecting whether a camera is interfered, comprising:

   acquiring (101) a first image collected at a first moment by a camera, wherein the first image is a color image;
   graying (102) the first image; and
   detecting (103), according to acuity of the first image after the graying and information entropy of the first image after the graying, whether the camera is interfered at the first moment;

   wherein if the camera is not interfered at the first moment, the method further comprises:

   acquiring a second image collected at a second moment by the camera, wherein the second moment is any moment after the first moment; and
   detecting, at least according to a degree of similarity between the second image and a reference image, whether the camera is interfered at the second moment, wherein the reference image is an image when the camera is not interfered;

   wherein the detecting, at least according to a degree of similarity between the second image and a reference image, whether the camera is interfered at the second moment comprises:

   calculating the degree of the similarity or a degree of dissimilarity between the second image and the reference image; and
   determining, according to the degree of the similarity or the degree of the dissimilarity between the second image and the reference image, whether the camera is interfered at the second moment;

   or comprises:

   calculating the degree of the similarity or a degree of dissimilarity between the second image and the reference image, and the acuity value difference between the second image and the reference image; and
   determining, according to the degree of the similarity or the degree of the dissimilarity between the second image and the reference image and according to the acuity value difference between the second image and the reference image, whether the camera is interfered at the second moment;

   wherein:

   the calculating the degree of the similarity or a degree of dissimilarity between the second image and the reference image comprises:
   splitting the second image into a predefined number of image blocks;
   calculating a hash fingerprint of each image block of the second image;
   calculating a Hamming distance between each image block of the second image and a corresponding image block of the reference image according to the hash fingerprint of each image block of the second image and a hash fingerprint of the corresponding image block of the reference image; and
   obtaining the degree of the similarity or the degree of the dissimilarity between the second image and the reference image at least according to the Hamming distance between each image block of the second image and the corresponding image block of the reference image.

**2.** The method according to claim 1, wherein the detecting, according to acuity of the first image after the graying and information entropy of the first image after the graying, whether the camera is interfered at the first moment comprises:

calculating the acuity of the first image and the information entropy of the first image after the graying; comparing the acuity of the first image with a first threshold to obtain a first comparison result, and comparing the information entropy of the first image with a second threshold to obtain a second comparison result; and determining, according to the first comparison result and the second comparison result, whether the camera is interfered.

**3.** The method according to claim 1, wherein before the detecting whether the camera is interfered at the first moment, the method further comprises:

filtering out noise of the first image.

**4.** The method according to claim 1, wherein the obtaining the degree of the similarity or the degree of the dissimilarity between the second image and the reference image at least according to the Hamming distance between each image block of the second image and the corresponding image block of the reference image comprises:

classifying, according to the Hamming distance between each image block of the second image and the corresponding image block of the reference image, a similarity threshold, and a dissimilarity threshold, various image blocks of the reference image or the second image into a similar image block, a dissimilar image block, and an image block that varies normally; calculating at least a sum of weights that correspond to all the dissimilar image blocks and/or a sum of weights that correspond to all the similar image blocks; and obtaining the degree of the similarity or the degree of the dissimilarity between the second image and the reference image according to the sum of the weights that correspond to all the dissimilar image blocks and/or the sum of the weights that correspond to all the similar image blocks, and a sum of weights that correspond to all the image blocks.

**5.** An apparatus for detecting whether a camera is interfered, comprising:

a first acquiring unit (81), configured to acquire a first image collected at a first moment by a camera, wherein the first image is a color image; a first processing unit (82), configured to gray the first image; and a first detecting unit (83), configured to detect, according to acuity of the first image after the graying performed by the first processing unit and information entropy of the first image after the graying, whether the camera is interfered at the first moment; a second acquiring unit (84), configured to acquire a second image collected at a second moment by the camera, wherein the second moment is any moment after the first moment; and a second detecting unit (85), configured to detect, at least according to a degree of similarity between the second image acquired by the second acquiring unit and a reference image, whether the camera is interfered at the second moment, wherein the reference image is an image when the camera is not interfered; the second detecting unit (85) comprises:

a first calculating subunit (851), configured to calculate the degree of the similarity or the degree of dissimilarity between the second image and the reference image; a first determining subunit (852), configured to determine, according to the degree of the similarity or the degree of the dissimilarity between the second image and the reference image, whether the camera is interfered at the second moment, where the degree of the similarity or the degree of the dissimilarity is obtained by the first calculating subunit (851); or

the second detecting unit (85) comprises:

a second calculating subunit (853), configured to calculate the degree of the similarity or the degree of the dissimilarity between the second image and the reference image, and the acuity value difference between the second image and the reference image; and a second determining subunit (854), configured to determine, according to the degree of the similarity or the degree of the dissimilarity between the second image and the reference image and according to the acuity value difference between the second image and the reference image, whether the camera is interfered at the second moment, where the degree of the similarity or the degree of the dissimilarity and the acuity value difference are obtained by the second calculating subunit (853);

wherein:

the first calculating subunit (851) or the second calculating subunit (853) comprises:

a processing module (8511), configured to split the second image acquired by the second acquiring unit into a predefined number of image blocks;
a first calculating module (8512), configured to calculate a hash fingerprint of each image block that is obtained by the processing module (8511);
a second calculating module (8513), configured to calculate a Hamming distance between each image block of the second image and a corresponding image block of the reference image according to the hash fingerprint of each image block that is obtained by the first calculating module (8512) and a hash fingerprint of the corresponding image block of the reference image.

6. The apparatus according to claim 5, further comprising: a second processing unit, configured to filter out noise of the first image, wherein the noise of the first image is acquired by the first acquiring unit.

7. A video surveillance system, **characterized in that** comprising a camera and the apparatus for detecting whether a camera is interfered according to claim 5 or 6.


**Patentansprüche**

1. Verfahren zum Erkennen von Kamera-Interferenzen, das umfasst:

Aufnehmen (101) eines ersten Bilds, das zu einem ersten Zeitpunkt von einer Kamera erfasst wird, wobei das erste Bild ein Farbbild ist;
Ausgrauen (102) des ersten Bilds; und
Erkennen (103) von Kamera-Interferenzen zu dem ersten Zeitpunkt anhand einer Schärfe des ersten Bilds nach dem Ausgrauen und einer Informationsentropie des ersten Bilds nach dem Ausgrauen;

wobei dann, wenn zu dem ersten Zeitpunkt keine Kamera-Interferenzen vorhanden sind, das Verfahren ferner umfasst:

Aufnehmen eines zweiten Bilds, das zu einem zweiten Zeitpunkt von der Kamera erfasst wird, wobei der zweite Zeitpunkt ein beliebiger Zeitpunkt nach dem ersten Zeitpunkt ist; und
Erkennen von Kamera-Interferenzen zu dem zweiten Zeitpunkt zumindest anhand eines Grads an Gleichheit zwischen dem zweiten Bild und einem Referenzbild, wobei das Referenzbild ein Bild ist, bei dem keine Kamera-Interferenzen vorhanden sind;

wobei das Erkennen von Kamera-Interferenzen zu dem zweiten Zeitpunkt zumindest anhand eines Grads an Gleichheit zwischen dem zweiten Bild und einem Referenzbild umfasst:

Berechnen des Grads an Gleichheit oder eines Grads an Ungleichheit zwischen dem zweiten Bild und dem Referenzbild; und
Bestimmen von Kamera-Interferenzen zu dem zweiten Zeitpunkt anhand des Grads an Gleichheit oder des Grads an Ungleichheit zwischen dem zweiten Bild und dem Referenzbild;

oder umfasst:

Berechnen des Grads an Gleichheit oder eines Grads an Ungleichheit zwischen dem zweiten Bild und dem Referenzbild und der Schärfenwertdifferenz zwischen dem zweiten Bild und dem Referenzbild; und
Bestimmen von Kamera-Interferenzen zu dem zweiten Zeitpunkt anhand des Grads an Gleichheit oder des Grads an Ungleichheit zwischen dem zweiten Bild und dem Referenzbild und anhand der Schärfenwertdifferenz zwischen dem zweiten Bild und dem Referenzbild;

wobei:

das Berechnen des Grads an Gleichheit oder eines Grads an Ungleichheit zwischen dem zweiten Bild und dem Referenzbild umfasst:

Unterteilen des zweiten Bilds in eine vordefinierte Anzahl von Bildblöcken;
Berechnen eines Hash-Fingerabdrucks jedes Bildblocks des zweiten Bilds;
Berechnen einer Hamming-Distanz zwischen jedem Bildblock des zweiten Bilds und
einem entsprechenden Bildblock des Referenzbilds anhand des Hash-Fingerabdrucks jedes Bildblocks des zweiten Bilds und eines Hash-Fingerabdrucks des entsprechenden Bildblocks des Referenzbilds; und
Ermitteln des Grads an Gleichheit oder des Grads an Ungleichheit zwischen dem zweiten Bild und dem Referenzbild zumindest anhand der Hamming-Distanz zwischen jedem Bildblock des zweiten Bilds und dem entsprechenden Bildblock des Referenzbilds.

2. Verfahren nach Anspruch 1, wobei das Erkennen von Kamera-Interferenzen zu dem ersten Zeitpunkt anhand der Schärfe des ersten Bilds nach dem Ausgrauen und der Informationsentropie des ersten Bilds nach dem Ausgrauen umfasst:

Berechnen der Schärfe des ersten Bilds und der Informationsentropie des ersten Bilds nach dem Ausgrauen;
Vergleichen der Schärfe des ersten Bilds mit einem ersten Schwellwert, um ein erstes Vergleichsergebnis zu ermitteln, und Vergleichen der Informationsentropie des ersten Bilds mit einem zweiten Schwellwert, um ein zweites Vergleichsergebnis zu ermitteln; und
Bestimmen von Kamera-Interferenzen anhand des ersten Vergleichsergebnisses und des zweiten Vergleichsergebnisses.

3. Verfahren nach Anspruch 1, wobei vor dem Erkennen von Kamera-Interferenzen zu dem ersten Zeitpunkt das Verfahren ferner umfasst:

Ausfiltern von Rauschen aus dem ersten Bild.

4. Verfahren nach Anspruch 1, wobei das Ermitteln des Grads an Gleichheit oder des Grads an Ungleichheit zwischen dem zweiten Bild und dem Referenzbild zumindest anhand der Hamming-Distanz zwischen jedem Bildblock des zweiten Bilds und dem entsprechenden Bildblock des Referenzbilds umfasst:

Klassifizieren, anhand der Hamming-Distanz zwischen jedem Bildblock des zweiten Bilds und dem entsprechenden Bildblock des Referenzbilds, eines Gleichheits-Schwellwerts und eines Ungleichheits-Schwellwerts, verschiedener Bildblöcke des Referenzbilds oder des zweiten Bilds in einen gleichen Bildblock, einen ungleichen Bildblock und einen Bildblock, der normalerweise variiert;
Berechnen mindestens einer Summe von Gewichten, die sämtlichen ungleichen Bildblöcken entsprechen, und/oder einer Summe von Gewichten, die sämtlichen gleichen Bildblöcken entsprechen; und
Ermitteln des Grads an Gleichheit oder des Grads an Ungleichheit zwischen dem zweiten Bild und dem Referenzbild anhand der Summe der Gewichte, die sämtlichen ungleichen Bildblöcken entsprechen, und/oder der Summe der Gewichte, die sämtlichen gleichen Bildblöcken entsprechen, und einer Summe von Gewichten, die sämtlichen Bildblöcken entsprechen.

5. Einrichtung zum Erkennen von Kamera-Interferenzen, die umfasst:

eine erste Aufnahmeeinheit (81), die so ausgeführt ist, dass sie ein erstes Bild aufnimmt, das zu einem ersten Zeitpunkt von einer Kamera erfasst wird, wobei das erste Bild ein Farbbild ist;
eine erste Verarbeitungseinheit (82), die so ausgeführt ist, dass sie das erste Bild ausgraut; und
eine erste Erkennungseinheit (83), die so ausgeführt ist, dass sie anhand einer Schärfe des ersten Bilds nach dem Ausgrauen, das von der ersten Verarbeitungseinheit durchgeführt wird, und der Informationsentropie des ersten Bilds nach dem Ausgrauen Kamera-Interferenzen zu dem ersten Zeitpunkt erkennt;
eine zweite Aufnahmeeinheit (84), die so ausgeführt ist, dass sie ein zweites Bild aufnimmt, das zu einem zweiten Zeitpunkt von der Kamera erfasst wird, wobei der zweite Zeitpunkt ein beliebiger Zeitpunkt nach dem ersten Zeitpunkt ist; und
eine zweite Erkennungseinheit (85), die so ausgeführt ist, dass sie zumindest anhand eines Maßes an Gleichheit zwischen dem zweiten Bild, das von der zweiten Aufnahmeeinheit aufgenommen wird, und einem Referenzbild Kamera-Interferenzen zu dem zweiten Zeitpunkt erkennt, wobei das Referenzbild ein Bild ist, bei dem keine Kamera-Interferenzen vorhanden sind;

wobei die zweite Erkennungseinheit (85) umfasst:

eine erste Berechnungs-Subeinheit (851), die so ausgeführt ist, dass sie den Grad an Gleichheit oder den Grad an Ungleichheit zwischen dem zweiten Bild und dem Referenzbild berechnet;
eine erste Bestimmungs-Subeinheit (852), die so ausgeführt ist, dass sie anhand des Grads an Gleichheit oder des Grads an Ungleichheit zwischen dem zweiten Bild und dem Referenzbild Kamera-Interferenzen zu dem zweiten Zeitpunkt bestimmt, wobei der Grad an Gleichheit oder der Grad an Ungleichheit durch die erste Berechnungs-Subeinheit (851) ermittelt wird; oder

wobei die zweite Erkennungseinheit (85) umfasst:

eine zweite Berechnungs-Subeinheit (853), die so ausgeführt ist, dass sie den Grad an Gleichheit oder den Grad an Ungleichheit zwischen dem zweiten Bild und dem Referenzbild und die Schärfenwertdifferenz zwischen dem zweiten Bild und dem Referenzbild berechnet; und
eine zweite Bestimmungs-Subeinheit (854), die so ausgeführt ist, dass sie anhand des Grads an Gleichheit oder des Grads an Ungleichheit zwischen dem zweiten Bild und dem Referenzbild und anhand der Schärfenwertdifferenz zwischen dem zweiten Bild und dem Referenzbild Kamera-Interferenzen zu dem zweiten Zeitpunkt bestimmt, wobei der Grad an Gleichheit oder der Grad an Ungleichheit und die Schärfenwertdifferenz durch die zweite Berechnungs-Subeinheit (853) ermittelt werden;

wobei:

die erste Berechnungs-Subeinheit (851) oder die zweite Berechnungs-Subeinheit (853) umfasst:
ein Verarbeitungsmodul (8511), das so ausgeführt ist, dass es das zweite Bild, welches von der zweiten Aufnahmeeinheit aufgenommen wird, in eine vordefinierte Anzahl von Bildblöcken unterteilt;
ein erstes Berechnungsmodul (8512), das so ausgeführt ist, dass es einen Hash-Fingerabdruck jedes Bildblocks, der von dem Verarbeitungsmodul (8511) ermittelt wird, berechnet;
ein zweites Berechnungsmodul (8513), das so ausgeführt ist, dass es eine Hamming-Distanz zwischen jedem Bildblock des zweiten Bilds und einem entsprechenden Bildblock des Referenzbilds anhand des Hash-Fingerabdrucks jedes Bildblocks, der von dem ersten Berechnungsmodul (8512) ermittelt wird, und eines Hash-Fingerabdrucks des entsprechenden Bildblocks des Referenzbilds berechnet.

6. Einrichtung nach Anspruch 5, die ferner umfasst: eine zweite Verarbeitungseinheit, die so ausgeführt ist, dass sie ein Rauschen des ersten Bilds ausfiltert, wobei das Rauschen des ersten Bilds von der ersten Aufnahmeeinheit aufgenommen wird.

7. Videoüberwachungssystem, **dadurch gekennzeichnet, dass** es eine Kamera und die Einrichtung zum Erkennen von Kamera-Interferenzen nach Anspruch 5 oder 6 umfasst.

**Revendications**

1. Procédé pour détecter si une caméra subit des interférences, comprenant les étapes suivantes :

acquérir (101) une première image collectée à un premier moment par une caméra, où la première image est une image en couleurs ;
griser (102) la première image ; et
détecter (103), selon l'acuité de la première image après le grisage et l'entropie des informations de la première image après le grisage, si la caméra subit des interférences au premier moment ;

où, si la caméra ne subit pas d'interférences au premier moment, le procédé comprend en outre les étapes suivantes :

acquérir une seconde image collectée à un second moment par la caméra, où le second moment est n'importe quel moment après le premier moment ; et
détecter, au moins conformément à un degré de similitude entre la seconde image et une image de référence, si la caméra subit des interférences au second moment, où l'image de référence est une image lorsque la caméra ne subit pas d'interférences ;

où la détection, au moins conformément à un degré de similitude entre la seconde image et une image de référence, du fait qu'une caméra subit ou non des interférences au second moment comprend les étapes suivantes :

calculer le degré de la similitude ou un degré de dissimilarité entre la seconde image et l'image de référence ; et déterminer, en fonction du degré de la similitude ou du degré de la dissimilarité entre la seconde image et l'image de référence, si la caméra subit des interférences au second moment ;

ou comprend les étapes suivantes :

calculer le degré de la similitude ou un degré de dissimilarité entre la seconde image et l'image de référence, et la différence de valeur d'acuité entre la seconde image et l'image de référence ; et déterminer, en fonction du degré de la similitude ou du degré de la dissimilarité entre la seconde image et l'image de référence, et en fonction de la différence de valeur d'acuité entre la seconde image et l'image de référence si la caméra subit des interférences au second moment ;

où le calcul du degré de la similitude ou d'un degré de dissimilarité entre la seconde image et l'image de référence comprend les étapes suivantes :

séparer la seconde image en un nombre prédéfini de blocs d'image ;
calculer une empreinte de hachage de chaque bloc d'image de la seconde image ;
calculer une distance de Hamming entre chaque bloc d'image de la seconde image et un bloc d'image correspondant de l'image de référence conformément à l'empreinte de hachage de chaque bloc d'image de la seconde image et à une empreinte de hachage du bloc d'image correspondant de l'image de référence ; et
obtenir le degré de la similitude ou le degré de la dissimilarité entre la seconde image et l'image de référence, au moins en fonction de la distance de Hamming entre chaque bloc d'image de la seconde image et le bloc d'image correspondant de l'image de référence.

2. Procédé selon la revendication 1, dans lequel la détection, selon l'acuité de la première image après le grisage et l'entropie des informations de la première image après le grisage, du fait que la caméra subit ou non des interférences au premier moment, comprend les étapes suivantes :

calculer l'acuité de la première image et l'entropie des informations de la première image après le grisage ;
comparer l'acuité de la première image à un premier seuil pour obtenir un premier résultat de comparaison, et comparer l'entropie des informations de la première image à un second seuil pour obtenir un second résultat de comparaison ; et
déterminer, en fonction du premier résultat de comparaison et du second résultat de comparaison, si la caméra subit des interférences.

3. Procédé selon la revendication 1, dans lequel, avant la détection du fait que la caméra subit ou non des interférences au premier moment, le procédé comprend en outre l'étape suivante :

filtrer le bruit de la première image.

4. Procédé selon la revendication 1, dans lequel l'obtention du degré de la similitude ou du degré de la dissimilarité entre la seconde image et l'image de référence au moins en fonction de la distance de Hamming entre chaque bloc d'image de la seconde image et le bloc d'image correspondant de l'image de référence comprend les étapes suivantes :

classer, en fonction de la distance de Hamming entre chaque bloc d'image de la seconde image et le bloc d'image correspondant de l'image de référence, un seuil de similitude, et un seuil de dissimilarité, divers blocs d'image de l'image de référence ou de la seconde image en un bloc d'image similaire, un bloc d'image dissemblable, et un bloc d'image qui varie normalement ;
calculer au moins une somme de poids qui correspondent à tous les blocs d'image dissemblables et/ou une somme de poids qui correspondent à tous les blocs d'image similaires ; et
obtenir le degré de la similitude ou le degré de la dissimilarité entre la seconde image et l'image de référence en fonction de la somme des poids qui correspondent à tous les blocs d'image dissemblables et/ou de la somme des poids qui correspondent à tous les blocs d'image similaires, et d'une somme de poids qui correspondent à tous les blocs d'image.

**5.** Appareil pour détecter si une caméra subit des interférences, comprenant :

une première unité d'acquisition (81), configurée pour acquérir une première image collectée à un premier moment par une caméra, où la première image est une image en couleurs ;
une première unité de traitement (82), configurée pour griser la première image ; et une première unité de détection (83), configurée pour détecter, selon l'acuité de la première image après le grisage effectué par la première unité de traitement et l'entropie des informations de la première image après le grisage, si la caméra subit des interférences au premier moment ;
une seconde unité d'acquisition (84), configurée pour acquérir une seconde image collectée à un second moment par la caméra, où le second moment est n'importe quel moment après le premier moment ; et
une seconde unité de détection (85), configurée pour détecter, au moins conformément à un degré de similitude entre la seconde image acquise par la seconde unité d'acquisition et une image de référence, si la caméra subit des interférences au second moment, où l'image de référence est une image lorsque la caméra ne subit pas d'interférences ;

la seconde unité de détection (85) comprenant :

une première sous-unité de calcul (851), configurée pour calculer le degré de la similitude ou le degré de dissimilarité entre la seconde image et l'image de référence ;
une première sous-unité de détermination (852), configurée pour déterminer, en fonction du degré de la similitude ou du degré de la dissimilarité entre la seconde image et l'image de référence, si la caméra subit des interférences au second moment, où le degré de la similitude ou le degré de la dissimilarité est obtenu par la première sous-unité de calcul (851) ; ou

la seconde unité de détection (85) comprend :

une seconde sous-unité de calcul (853), configurée pour calculer le degré de la similitude ou le degré de la dissimilarité entre la seconde image et l'image de référence, et la différence de valeur d'acuité entre la seconde image et l'image de référence ; et
une seconde sous-unité de détermination (854), configurée pour déterminer, en fonction du degré de la similitude ou du degré de la dissimilarité entre la seconde image et l'image de référence, et en fonction de la différence de valeur d'acuité entre la seconde image et l'image de référence si la caméra subit des interférences au second moment,
où le degré de la similitude ou le degré de la dissimilarité et la différence de valeur d'acuité sont obtenus par la seconde sous-unité de calcul (853) ;

où
la première sous-unité de calcul (851) ou la seconde sous-unité de calcul (853) comprend :

un module de traitement (8511), configuré pour séparer la seconde image acquise par la seconde unité d'acquisition en un nombre prédéfini de blocs d'image ;
un premier module de calcul (8512), configuré pour calculer une empreinte de hachage de chaque bloc d'image qui est obtenu par le module de traitement (8511) ;
un second module de calcul (8513), configuré pour calculer une distance de Hamming entre chaque bloc d'image de la seconde image et un bloc d'image correspondant de l'image de référence conformément à l'empreinte de hachage de chaque bloc d'image qui est obtenue par le premier module de calcul (8512) et à une empreinte de hachage du bloc d'image correspondant de l'image de référence.

**6.** Appareil selon la revendication 5, comprenant en outre : une seconde unité de traitement, configurée pour filtrer le bruit de la première image, où le bruit de la première image est acquis par la première unité d'acquisition.

**7.** Système de surveillance vidéo, **caractérisé en ce qu'**il comprend une caméra et l'appareil pour détecter si une caméra subit des interférences selon la revendication 5 ou la revendication 6.

Acquire a frame of a first image collected at a first moment by a camera — S101

Gray the first image — S102

Detect, according to acuity of the first image after the graying and/or information entropy of the first image after the graying, whether the camera is interfered at the first moment — S103

FIG. 1

Calculate the acuity of the first image — S1031

Determine whether the acuity of the first image is smaller than a first threshold — S1032

N → The camera is not interfered at the first moment

Y → The camera has already been interfered at the first moment

FIG. 2

Calculate the information entropy of the first image —S1033

Determine whether the information entropy of the first image is smaller than a second threshold —S1034

N → The camera is not interfered at the first moment

Y

The camera has already been interfered at the first moment

FIG. 3

Calculate the acuity of the first image —S1035

Determine whether the acuity of the first image is smaller than a first threshold —S1036

N → The camera is not interfered at the first moment

Y

Calculate the information entropy of the first image —S1037

Determine whether the information entropy of the first image is smaller than a second threshold —S1038

N →

Y

The camera has already been interfered at the first moment

FIG. 4

Calculate the information entropy of the first image — S1039

Determine whether the information entropy of the first image is smaller than a second threshold — S10310

N →

The camera is not interfered at the first moment

Y ↓

Calculate the acuity of the first image — S10311

Determine whether the acuity of the first image is smaller than a first threshold — S10312

N →

Y ↓

The camera has already been interfered at the first moment

FIG. 5

Acquire a frame of a first image collected at a first moment by a camera — S101

Gray the first image — S102

Detect, according to acuity of the first image after the graying and/or information entropy of the first image after the graying, whether the camera is interfered at the first moment — S103

N

Acquire a frame of a second image collected at a second moment by the camera — S104

Detect, at least according to a degree of similarity between the second image and a reference image, whether the camera is interfered at the second moment — S105

FIG. 6

Split the second image into a predefined number of image blocks — S1051

Calculate a hash fingerprint of each image block of the second image — S1052

Calculate a Hamming distance between each image block of the second image and a corresponding image block of the reference image according to the hash fingerprint of each image block of the second image and a hash fingerprint of the corresponding image block of the reference image — S1053

Obtain the degree of the similarity or a degree of dissimilarity between the second image and the reference image at least according to the Hamming distance between each image block of the second image and the corresponding image block of the reference image — S1054

S1055

Determine whether the degree of the dissimilarity between the second image and the reference image is greater than a third threshold

N

The camera is not interfered at the second moment

Y

The camera has already been interfered at the second moment

FIG. 7

Classify, according to the Hamming distance between each image block of the second image and the corresponding image block of the reference image, a similarity threshold, and a dissimilarity threshold, various image blocks of the reference image or the second image into a similar image block, a dissimilar image block, and an image block that varies normally

S10541

Calculate at least a sum of weights that correspond to all the dissimilar image blocks and/or a sum of weights that correspond to all the similar image blocks

S10542

Obtain the degree of the similarity or the degree of the dissimilarity between the second image and the reference image according to the sum of the weights that correspond to all the dissimilar image blocks and/or the sum of the weights that correspond to all the similar image blocks, and a sum of weights that correspond to all the image blocks

S10543

FIG. 8

Split the second image into a predefined number of image blocks — S1051

Calculate a hash fingerprint of each image block of the second image — S1052

Calculate a Hamming distance between each image block of the second image and a corresponding image block of the reference image according to the hash fingerprint of each image block of the second image and a hash fingerprint of the corresponding image block of the reference image — S1053

Obtain the degree of the similarity or a degree of dissimilarity between the second image and the reference image at least according to the Hamming distance between each image block of the second image and the corresponding image block of the reference image — S1054

S1055

Determine whether the degree of the dissimilarity between the second image and the reference image is greater than a third threshold

N

The camera is not interfered at the second moment

Y

S1056

Calculate an acuity value difference between the second image and the reference image

S1057

Determine whether the acuity value difference between the second image and the reference image is greater than a fourth threshold

N

Y

The camera has already been interfered at the second moment

FIG. 9

An apparatus for detecting
whether a camera is interfered — 8

First acquiring
unit — 81

First processing
unit — 82

First detecting
unit — 83

FIG. 10

An apparatus for detecting
whether a camera is interfered — 8

First acquiring
unit — 81

First processing
unit — 82

First detecting
unit — 83

Second
acquiring unit — 84

Second
detecting unit — 85

FIG. 11

Second detecting unit 85

First calculating subunit 851

First determining subunit 852

FIG. 12

Second detecting unit 85

Second calculating subunit 853

Second determining subunit 854

FIG. 13

First calculating
subunit — 851

Processing module — 8511

First calculating
module — 8512

Second calculating
module — 8513

Third calculating
module — 8514

FIG. 14

Second calculating subunit — 853

Processing module — 8511

First calculating
module — 8512

Second calculating
module — 8513

Third calculating
module — 8514

FIG. 15

Third calculating module — 8514

Processing submodule — 85141

First calculating submodule — 85142

Second calculating submodule — 85143

First determining submodule — 85144

FIG. 16

Third calculating module ⟋ 8514

Processing submodule — 85141

First calculating submodule — 85142

Second calculating submodule — 85143

First determining submodule — 85144

Third calculating submodule — 85145

Second determining submodule — 85146

FIG. 17

An apparatus for detecting whether a camera is interfered — 1

Input interface — 11

Processor — 12

FIG. 18

| W0 | W1 | W3 | W3 | W1 | W0 |
|----|----|----|----|----|----|
| W1 | W3 | W3 | W3 | W3 | W1 |
| W2 | W3 | W4 | W4 | W3 | W2 |
| W2 | W3 | W4 | W4 | W3 | W2 |
| W1 | W3 | W3 | W3 | W3 | W1 |
| W0 | W1 | W3 | W3 | W1 | W0 |

FIG. 19

| 1 | 0 | −1 | 1 | 0 | 1 |
|---|---|----|---|---|---|
| 1 | 0 | 0 | 0 | 0 | 0 |
| 0 | −1 | 0 | 0 | 0 | 0 |
| 0 | 0 | 0 | 0 | 0 | 0 |
| 0 | 1 | 0 | 0 | 1 | −1 |
| 0 | 0 | 0 | 0 | 1 | 1 |

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03043340 A1
- JP 2008077517 A
- EP 1936576 A1

**Non-patent literature cited in the description**

- IMAGE ANALYSIS AND INTERPRETATION. *IEEE SOUTHWEST SYMPOSIUM ON,* 30 March 2004, 36-40